# EUROPEAN PATENT APPLICATION

(11) **EP 1 435 569 A2**
(43) Date of publication of application: **07.07.2004**
(21) Application number: 03256780.2
(22) Date of filing: 28.10.2003
(51) Int. Cl.: G06F 9/44

(54) **Method and apparatus for localization of applications**

(30) Priority: 31.10.2002 US 284891
(71) Applicant: Hewlett-Packard Development Company, L.P., Houston, TX 77070 (US)
(72) Inventor: Kerr, John, Monmouth OR 97361 (US); GU, Jun, Corvallis, OR 97330 (US)
(74) Representative: Jackson, Richard Eric

(57) **Abstract**

A method and system for localizing applications receives a request for an application to be represented in a locale (202), loads an application template having an area for content and an area for locale specific information corresponding to the locale (208), caches one or more compressed localization objects with locale specific information corresponding to the application template (210), decompresses the one or more compressed localization objects as needed (210) to fill portions of the application template with locale specific information (212).

## Description

### BACKGROUND OF THE INVENTION

Accessing web pages is becoming more difficult as applications using web pages have become larger and more complex. These applications include conventional web sites, software applications with web pages, and other applications with web based user interfaces. The web site presence of a typical corporation may include a public website with non-confidential corporate information, a secure internal website access with confidential and/or departmental information, an electronic commerce website for ordering, purchasing, and paying for goods or services offered by the company, and many other complex applications. In addition to their inherent complexity, these applications and interfaces are often personalized to a particular user with specific permissions and preferences. Unfortunately, limited processor power, network bandwidth, and storage latencies can make deploying large and complex applications tailored to individual users unwieldy and difficult to manage.

Internationalization and localization considerations present unique challenges as the content and presentation of these web sites and applications must be provided in several different languages and locales (i.e., local currencies, time-zones, holidays, and other regional customs). This not only requires modification of the content portion of the application but also the actual text displayed on buttons and other control portions of the application. In certain cases, logic within the web site or application may also be modified to accommodate the specific language and locale requirements.

One conventional solution keeps several complete copies of an application for each of the different languages or locales. Unfortunately, this requires a great deal of storage and poses difficulties maintaining updates and changes to the application and interface. Another solution reduces the storage and maintenance issues by separating the localized text and images from the remainder of the application or web site. This may reduce maintenance and storage requirements but instead impacts run-time performance of complex web-based applications when accessing and presenting information in the various language and locales.

### BRIEF DESCRIPTION OF THE DRAWINGS

FIG. 1 is a block diagram illustrating the organization of components used by an application to localize an application with various localization characteristics in accordance with one implementation of the present invention;
FIG. 2 is a flow chart diagram illustrating the operations used to localize applications in accordance with one implementation of the present invention;
FIG. 3 is a flow chart diagram of the operations used for managing the localization information associated with an application in accordance with one implementation of the present invention;
FIG. 4 is a localization table illustrating an arrangement of localization object identifiers used in an application in accordance with one implementation of the present invention;
FIG. 5 is a block diagram depicting an application provided in multiple locales over a network using one implementation of the present invention; and
FIG. 6 is a block diagram of a system used by one implementation of the present invention for efficient delivery of web pages and applications.

### DETAILED DESCRIPTION

Aspects of the present invention are advantageous in at least one or more of the following ways. An application can be presented in multiple locales without significant storage and maintenance requirements. Locale information contained in multiple compressed objects is decompressed, accessed, and combined with the application according to the localization requirements for the application. Multiple copies of the application are not required as the localized content is merged with a single copy of the non-localized content and application at run time. Compressing and caching the localization objects keeps the effective throughput of transferring the localization information high and the storage requirements for the information in memory and elsewhere in storage relatively low.

A database records statistics on the frequency and sequence that users access different pages in an application. For example, the database can be a web access profile database used in profiling a web site. The resulting usage patterns assists in predicting the most frequently accessed pages and determining which corresponding localization objects should be compressed, decompressed, cached, or returned to disk storage or other long term storage areas. Localization objects are ranked based upon various factors recorded in the database and assigned a metric value for subsequent processing. The ranking can facilitate in predicting the application and corresponding locale to be combined with the application and improves the overall efficiency of the application.

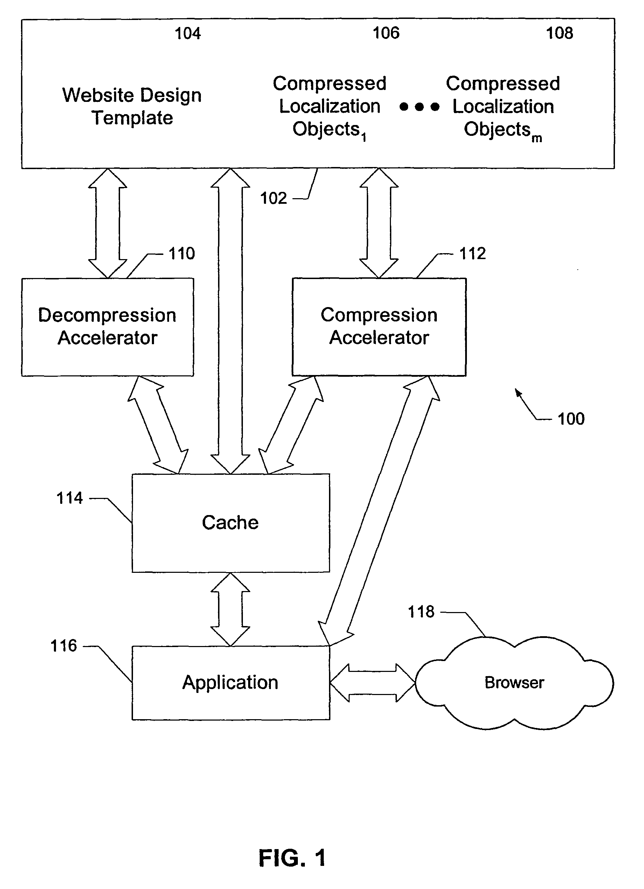

FIG. 1 is a block diagram illustrating the organization of components used by an application to localize an application with various localization characteristics in accordance with one implementation of the present invention. The localization characteristics not only include a selected language (i.e., English, German, French, Spanish, and Japanese) but also include related information dealing with currency, data/time, dialects, holiday schedules, calendars, and geographic location information related to the language or culture. These locale characteristics may be used for applications in international or multicultural markets.

Components 100 include web pages 102 having a website design template 104 with compressed localization objects₁ 106 through compressed localization objectsₘ 108, decompression accelerator component 110, compression accelerator component 112, cache 114, application 116, and a browser 118.

Web pages 102 are divided into website design template 104 and compressed localization objects₁ 106 through compressed localization objectsₘ 108. Logic within website design template 104 organizes the branches of web pages using a web site map. Implementations of the present invention improve performance of the application by predicting and ranking the branches of web pages a user is likely to request. Branches of web pages 102 are taken from website design template 104 and combined with one or more compressed localization objects₁ 106 through compressed localization objectsₘ 108 and loaded into cache 114. Compressed localization objects₁ 106 through compressed localization objectsₘ 108 tailor the language and other local characteristics within application 116 according to the users specified localization requirements. Browser 118 typically accesses application 116 with localization information from the one or more localization objects over a network.

U.S. Patent Application entitled, "Predictive Branching and Caching Method and Apparatus for Applications" assigned to the assignee of the present invention by Jun Gu and John M. Kerr, filed on the same day therewith describes using predictive branching and caching in an application based on user activities to improve performance associated with operating the application. In some cases, branching and caching information described above can also be used to improve the overall application performance associated with internationalization, localization, and other customizations in accordance with implementations of the present invention.

For example, caching and loading one or more web page branches can make a localization object more readily available and improve the overall application performance.

Decompression accelerator 110 and compression accelerator 112 operate on compressed localization objects₁ 106 through compressed localization objectsₘ 108 in accordance with one implementation of the present invention. Compressing and decompressing these localization objects in accordance with the present invention also improves effective throughput and storage capacity when executing application 116. Each localization object contains locale information for populating website design template 104 and make application 116 comply with localization requirements.

Website design template 104 and localization objects keep the localization information separate from the application thereby reducing resource utilization and making the localization process easier. For example, web design template 104 makes it easier to modify the application as only one copy of the web design template 104 is kept and modified instead of multiple copies of the application for each locale. This arrangement also saves storage space as only one copy of the application or web design template 104 needs to be stored. Updates to the various localization objects may or may not be necessary depending on the modifications made to the application. For example, localization objects remain essentially the same if the organization of an application changes and the same localized information is used.

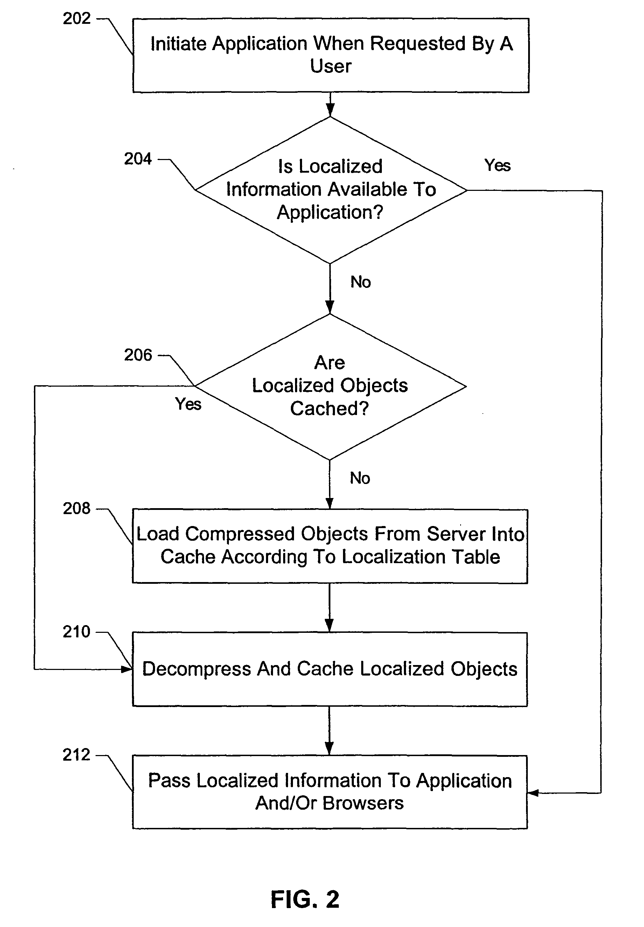

FIG. 2 is a flow chart diagram illustrating the operations used to localize applications in accordance with one implementation of the present invention. An agent or other process running in the background or foreground initially receives a request to initiate an application session from a user (202). These agents and other processes operate on the web site map and a corresponding web access database profile as a lower priority background process to minimize the performance impact on other processes running on a computer. For increased performance, the agents or other processes can operate at a higher priority relative to other processes running on the computer.

Generally, the user specifies to the agent or process the locale to combine with the application. As previously described, locale information includes various categories or characteristics of locale information including a language, a currency, a date/time, a dialect of the language, a holiday schedule, a calendar, a geographic location, and many other related types of information. The localization process can be executed by an agent or other processes on a server or client depending on the organization of the application and the infrastructure of the computer systems processing the application. Typically, localization areas in the application template are filled with locale specific information contained or referenced in one or more localization objects.

Agents or other processes determine whether the localization information is currently available for combination with the application (204). In one implementation of the invention, localization objects are already decompressed in memory or other storage areas and ready to be combined with the application. For example, localization information may be available if it was previously used by another user accessing the application or was loaded as part of a predictive branching and caching operation previously performed. Under these circumstances, the localization information is then combined with the application or web pages (212).

Localization objects can also be cached in memory and made available with additional processing (206). In one implementation of the present invention, compressed localization objects are stored in cache and decompressed before being combined into the application. Decompressing the cached and compressed localization objects facilitates combining them with the application (210).

Alternatively, a compressed localization object may not be available in cache for combining with an application (206). These compressed localization objects are referenced using a localization table and loaded into cache from a server or storage area used to hold one or more compressed localization objects (208). In one implementation, the compressed localization objects are stored over a network on a storage device associated with a server. The localization table cross-references a set of compressed localization objects capable of modifying an application according to different corresponding locales. For example, these locales can be identified by various languages including German, French, English, Spanish, and Japanese. Locale information for currency, language, and data/time would correspond to the countries or regions where the languages are predominantly spoken. Selecting a locale identifies the one or more localization objects in the localization table to be combined with the application.

Compressed localization objects generally remain compressed until after they are identified and loaded into cache. Localization objects are decompressed in cache until it is apparent that the information they hold is needed for use in the application. This reduces storage and memory requirements while making the localization information more readily available. Decompression and compression can be performed using LZW (Lempel-Ziv-Welch) compression as well as many other compression techniques.

Decompression accelerators can be employed in hardware, firmware, or software to decompress the compressed localization objects when the information they hold is needed for use in an application. Once decompressed, the localization information is ready for combination with the application to deliver the localized application (212). In one implementation, the application can be executed within a browser, a web server, or can be a separate standalone application process configured and designed in accordance with implementations of the present invention.

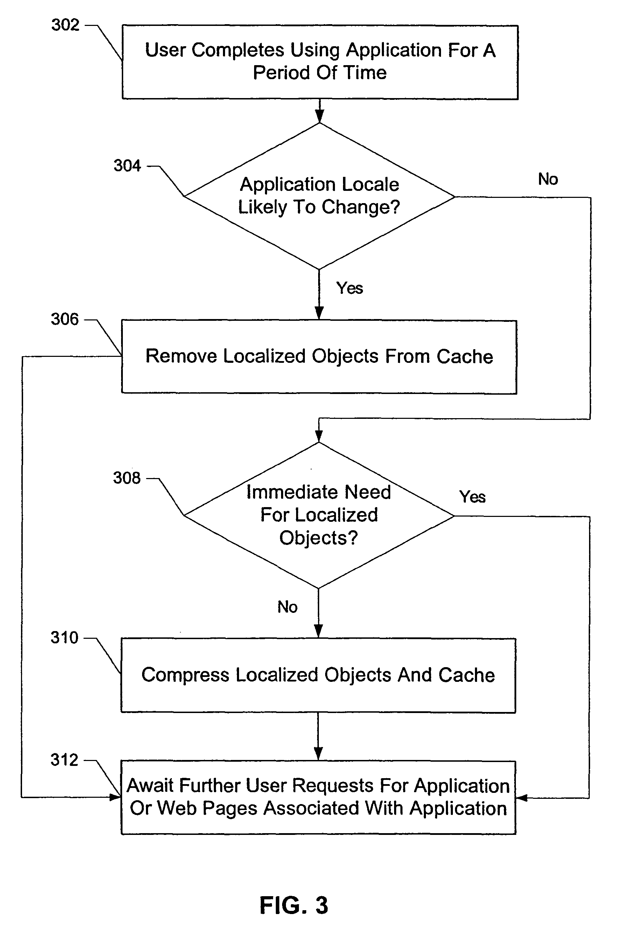

FIG. 3 is a flow chart diagram of the operations used for managing the localization object cache associated with an application in accordance with one implementation of the present invention. Initially, a user or users utilize an application or web page for a period of time (302). During this time period, for example, a user may establish a usage pattern of ordering a product or checking on the order status of a product and then exiting and completing use of the web site or application. In another example, a user may indicate a preference for certain items merely by browsing a catalog of products provided by a web site or application without actually ordering the product or service.

Managing the localization information and objects partly depends on whether the locale for a given application is likely to change (304). Generally, localization objects do not change rapidly as the locale selected for an application tends to remain the same over a time interval. Usage patterns associated with a user or users is one factor used to predict when the locale for an application is likely to change. For example, an international airline reservation system application is likely to change locales more frequently than an application used for national airline reservations. Users in different countries will prefer to use the locale associated with the different countries while a national airline reservation system will more than likely keep the same localization information for a long time interval.

Predicted or actual changes in localization information generally cause the localization objects to be removed from cache (306). The localization object may be discarded or compressed and saved back in cache if it is likely that the localization objects will not be needed by an application or other use. The localization objects removed from cache may be written back to secondary storage, hard disks or simply erased from cache or memory.

In an alternate implementation, the current localization objects can be replaced with a default set of localization objects based on the most commonly used locale for the application (i.e., English). If the system is running out of available cache or memory, localization objects are managed using a least-frequently-used (LFU) policy to determine which of the cached localization objects should be removed. For example, a compressed localization object having the least number of references or requests over a time period will be removed first. To further improve run-time efficiency, an agent or other process can predicts which of the cached localization objects will most likely be used by existing user sessions and user behavior on the system and keep these localization objects in cache with a higher priority than other localization objects.

When the locale does not change over time (304) yet the localization objects are not needed immediately (308) they may be discarded or, if necessary, compressed and put back into cache (310). Compressing the relatively unused localization objects saves space in cache for caching other localization objects for this or other applications. Conversely, if the localization objects are needed relatively quickly (308) then they remain in cache ready to be delivered to the application when requested (312). Ranking information associated with various branches in the website map can also be used to determine the localization objects to be cached decompressed, cached compressed, or swapped out onto secondary storage. For example, the least frequently used localization objects can be compressed and swapped out of cache onto disk or secondary storage while the most frequently used localization objects may remain in cache where they can be decompressed and made ready to use.

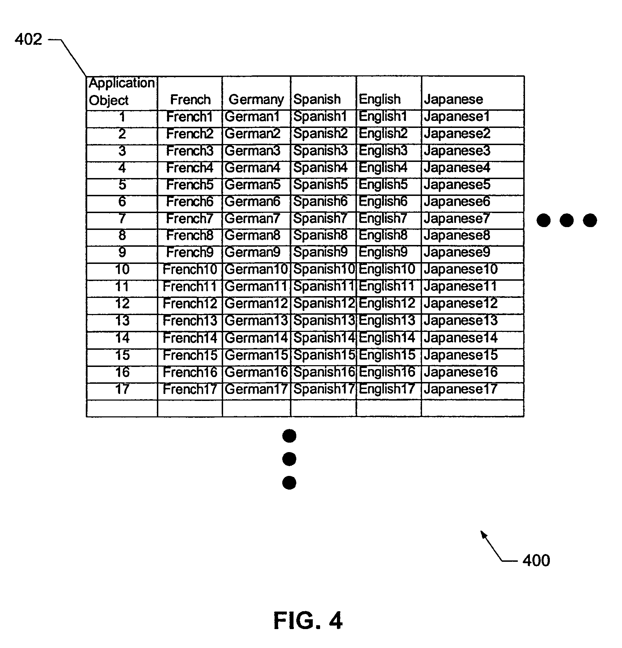

FIG. 4 is a localization table 400 illustrating an arrangement of localization object identifiers used in an application in accordance with one implementation of the present invention. In this example, localization table 400 includes one or more locales or languages along an x-dimension and a list of objects used by an application along the y-dimension. A locale/object pair references an identifier entry in the table corresponding to the localization object for use in the application. This locale/object pair is identified in an application template associated with the application and cross-referenced during the localization process as previously described. Alternate implementations can include many more locales and localization objects than described in this localization table 400. Also, the localization objects can be organized and referenced using different data structures other than a two-dimensional table.

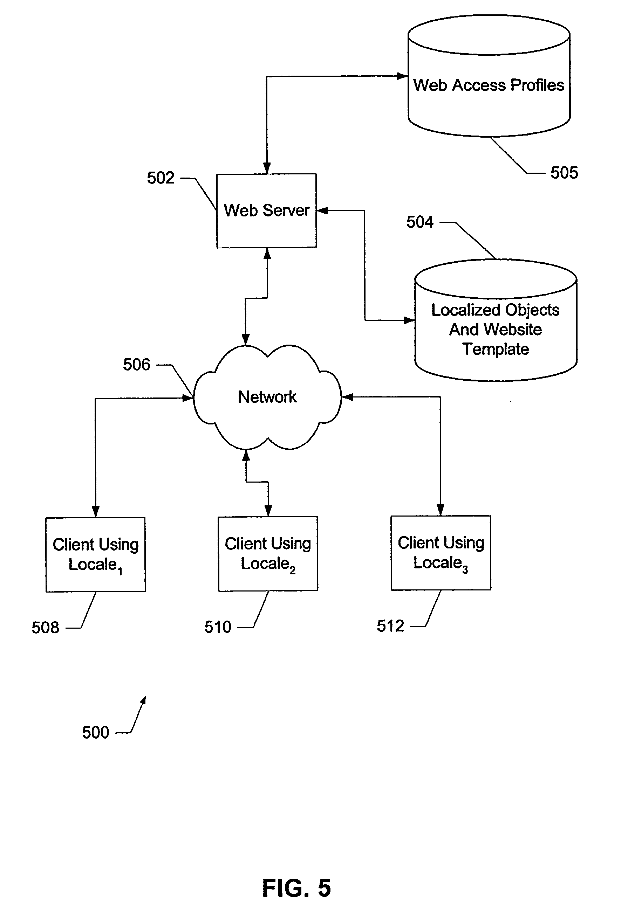

FIG. 5 is a block diagram depicting an application being provided in multiple locales over a network 500 using one implementation of the present invention. Network 500 includes a web server 502, a localization object database 504, web access profiles 505, a network 506, a client using locale₁ 508, a client using locale₂ 510, and a client using locale₃ 512.

Implementations of the present invention store historical information on users accessing web pages and applications in web access profiles 505. These web access profiles 505 are used by web server 502 to make branch predictions and precompute cache for one or more web pages or from an application in accordance with the present invention and "Predictive Branching and Caching Method and Apparatus for Applications" assigned to the assignee of the present invention and authored by Jun Gu and John M. Kerr.

Objects in localization object database 504 include portions of the application and web sites in one or more different languages or locales. Depending on the locale selected by the user, different objects are combined with an application or web site and delivered to the user fulfilling their request for a web page or pages in accordance with their locale and/or language.

For example, web server 502 identifies a web access profile for a user in web access profiles 505 to predict the branch of the application and web site to load into cache. Locale information in the localization object database 504 is combined with the predicted branch to deliver the web pages in the application in the proper locale or language. In this example, client using locale₁ 508, client using locale₂ 510, and client using locale₃ 512 can each receive versions of an application or web pages tailored to the selected language or locale. Further, implementations of the present invention cache the compressed localization objects for the branches and web pages most often selected by a user, several users, or classes of users to improve the efficiency of delivering the web pages and applications without storing multiple copies of the application or web pages.

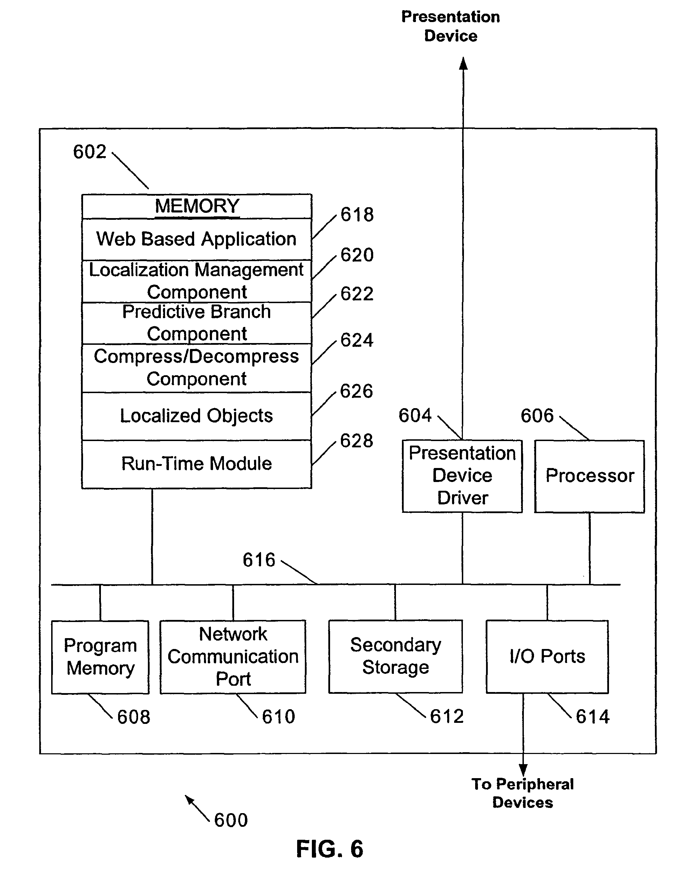

FIG. 6 is a block diagram of a system used by one implementation of the present invention for efficient delivery of localized web pages and applications in accordance with implementations of the present invention. In this example, system 600 includes a memory 602, typically random access memory (RAM), a presentation device driver 604, a processor 606, a program memory 608 (for example, a read-only memory (ROM) such as a flash ROM), a network communication port 610, a secondary storage 612, and I/O ports 614 operatively coupled together over bus 616. System 600 can be preprogrammed, in ROM, for example, or it can be programmed (and reprogrammed) by loading a program from another source (for example, from a floppy disk, a CD-ROM, or another computer).

Memory 602 includes a web based application 618, a localization management component 620, a predictive branch component 622, a compress/decompress component 624, localization objects 626, and a run-time module 628. Web based application 618 is an application that delivers a user interface to a web site or application over a network like the Internet or an intranet. This application can use programming constructs based on HTML (hypertext markup language), XML (extensible markup language), or other standards as well as proprietary programming languages for delivering web pages or portions of the application over a network. Some or all of web based application 618 can be executed on system 600 operating as either a client system or a server system.

Localization management component 620 performs operations associated with localization of an application using localization objects and managing the caching or storage of these objects used in the application. As previously described, localization of the applications includes identifying the localization objects associated with pages in a web site or an application, delivering the localization objects, and combining the objects with the web site or application. This includes compressing and decompressing the localization objects to more efficiently utilize memory and storage. Further, localization management component 620 also determines when the localization objects are no longer being used and the objects can be removed from cache and replaced with new localization objects.

Predictive branch component 622 uses the information stored in the web access profiles associated with each user to predict the next one or more branches of a web site or web pages to load into cache. Different branches of the web site or web pages are loaded into cache depending on the user and the historical access information for the particular user. In one implementation, predictive branch component 622 uses average values instead of a specific web access profile when a user does not have a specific web access profile to reference in the prediction operation.

Further memory and storage efficiencies are obtained by using compress/decompress component 624 to reduce the size of localization objects that have to be cached and improve the efficiency of storing and retrieving localization objects. Alternatively, compress/decompress component 624 is implemented in firmware or hardware for increased performance. As previously described, localization objects 626 provide information that tailors the web pages, branches of web pages, and application to a specific language or locale as required by each user.

To facilitate performing these operations on a computer system, run-time module 628 allocates resources from memory, storage area, and processor time-slices to these and other operations. For example, run-time module 628 can be based on a real-time kernel of an operating system or can be preemptive operating system having fewer real-time operating characteristics.

Presentation device driver 604 provides digital and/or analog signal output to an image generation device such as a display or a printer. The image generation device can be local or remotely located over a network. In one implementation, web pages, branches of web pages, and some or all of the applications are carried by the digital and/or analog signal output in accordance with implementations of the present invention.

Secondary storage 612 is suitable for storing executable computer programs, including programs embodying the present invention, and data including buffers and temporary storage space as need to implement aspects of the present invention. For example, databases with additional localization objects, web access profiles, and other information used by one or more implementations of the present invention can be stored in secondary storage 612.

Input/output (I/O) ports 614 are coupled to system 600 over bus 616. Peripheral devices connected through I/O ports 614 may include audio ports generating analog and/or digital signals amplified for listening over an audio generation device like a speaker. Input/output ports facilitate the receipt and transmission of data (e.g., text, images, videos, and animations) in analog or digital form over communication links such as a serial link, local area network, wireless link, and parallel link. These input/output (I/O) 614 ports also facilitate communication with a wide variety of peripheral devices including keyboards, pointing devices (mouse, touchpad and touchscreen) and printers. Alternatively, separate connections (separate buses) can be used to interface with these peripheral devices using a combination of Small Computer Systems Interface (SCSI), Universal Serial Bus (USB), IEEE 1394/Firewire, Personal Computer Memory Card International Association (PCMCIA) or any other protocol suitable for interfacing with the peripheral device being attached to system 600.

Generally, an apparatus of the present invention can be implemented in a computer program product tangibly embodied in a machine-readable storage device for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits).

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.

While specific embodiments have been described herein for purposes of illustration, various modifications may be made without departing from the spirit and scope of the invention. For example, various implementations are described as including web pages, web based applications, or web sites however alternate implementation can be applications that do not rely upon technology that web pages or web sites use to deliver information or operate. Instead, implementations of the present invention can be applied to a wide range of standalone applications or applications delivered over an intranet or private network. Accordingly, the invention is not limited to the above-described implementations, but instead is defined by the appended claims in light of their full scope of equivalents.

## Claims

1. A method of localizing applications, comprising:
receiving a request for an application to be represented in a locale (202);
loading an application template having an area for content and an area for locale specific information corresponding to the locale (208);
caching one or more compressed localization objects with locale specific information corresponding to the application template (210); and
decompressing the one or more compressed localization objects as needed (210) to fill portions of the application template with locale specific information (212).

2. The method of claim 1 further comprising:
combining the locale specific information with the application template.

3. The method of claim 1 wherein the locale specific information includes selecting one or more localization characteristics from a set including, a language, a currency, a date/time, a dialect of the language, a holiday schedule, a calendar, and a geographic location.

4. The method of claim 1 wherein the application includes web based applications residing on a server, a client, or both a client and server system connected over a network (502, 508).

5. The method of claim 1 wherein the application template identifies where to insert locale specific information when the application is processed.

6. The method of claim 1 wherein the application template is specified using an XML (extensible markup language) compatible language.

7. The method of claim 1 wherein the caching further comprises:
identifying the compressed localization object in a localization table having localization information for one or more locales (402);
retrieving the compressed localization object from a server storing one or more compressed localization objects; and
loading the compressed localization object corresponding to the entry in the localization table into cache.

8. The method of claim 1 wherein decompressing the one or more compressed localization objects occurs when the content of the one or more compressed localization objects associated with the application is requested.

9. A method of managing localization information associated with an application, comprising:
predicting when portions of one or more applications and associated localization information are least likely to be used in the future (304);
identifying one or more localization objects holding the corresponding localization information associated with the portions of the one or more applications (306);
removing the identified one or more localization objects associated with the portions of the one or more applications (306); and
loading a compressed localization object into cache for subsequent use with the associated one or more applications (310).

10. The method of claim 9 wherein the predicting further comprises:
organizing a sitemap of the pages in the one or more applications ranked according to a usage pattern by one or more users; and
determining those pages of the one or more applications unlikely to be in use based on the rank.

11. The method of claim 9 wherein removing the localization information occurs when a different locale is requested and further comprises removing the corresponding localization objects.

12. The method of claim 9 further comprising:
predicting when the locale associated with the localization information and localization objects is least likely to be used; and
removing the localization information and corresponding localization objects related to the locale.

13. The method of claim 12 wherein the predicting further comprises:
organizing a ranking of the locales used in the application according to a usage pattern by one or more users; and
determining that the locale presently associated with the application is unlikely to be used based on the ranking.

14. An apparatus for localizing applications, comprising:
a processor that executes instructions to localize an application (606);
a memory (602) having instructions when executed on the processor that receive a request for an application to be represented in a locale (202), load an application template having an area for content and an area for locale specific information corresponding to the locale (208), cache one or more compressed localization objects with locale specific information corresponding to the application template (210), and decompress the one or more compressed localization objects as needed to fill portions of the application template with locale specific information (212).

15. The apparatus of claim 14 further comprising instructions in the memory that combine the locale specific information with the application template.

16. The apparatus of claim 14 wherein the locale specific information includes selecting one or more localization characteristics from a set including, a language, a currency, a date/time, a dialect of the language, a holiday schedule, a calendar, and a geographic location.

17. The apparatus of claim 14 wherein the memory includes instructions for controlling applications residing on a server, a client, or both a client and server system connected over a network (502, 508).

18. An apparatus for managing localization information associated with an application, comprising:
a processor (606) that executes instructions to manage the localization information;
a memory (602) having instructions when executed on the processor that predict when portions of one or more applications and associated localization information are least likely to be used in the future (304), identify one or more localization objects holding the corresponding localization information associated with the portions of the one or more applications (306), remove the identified one or more localization objects associated with the portions of the one or more applications (306), and load a compressed localization object into cache for subsequent use with the associated one or more applications (310).

19. The apparatus of claim 18 wherein the instructions that predict further comprise instructions that organize a sitemap of the pages in the application ranked according to a usage pattern by one or more users, determines that the pages and the application unlikely to be used in the future based on the rank.

20. The apparatus of claim 18 further comprising instructions that remove the localization information and corresponding localization objects when a different locale is requested in association with the application.

21. A computer program product, tangibly stored on a computer-readable medium, comprising instructions to localize applications and operable to cause a programmable processor to:
receive a request for an application to be represented in a locale (202);
load an application template (208) having an area for content and an area for locale specific information corresponding to the locale;
cache one or more compressed localization objects with locale specific information corresponding to the application template (210); and
decompress the one or more compressed localization objects as needed (210) to fill portions of the application template with locale specific information (212).

22. A computer program product, tangibly stored on a computer-readable medium, comprising instructions to manage localization information associated with an application and operable to cause a programmable processor to:
predict when portions of one or more applications and associated localization information are least likely to be used in the future (304);
identify one or more localization objects holding the corresponding localization information associated with the portions of the one or more applications (306);
remove the identified one or more localization objects associated with the portions of the one or more applications (306); and
load a compressed localization object into cache for subsequent use with the associated one or more applications (310).

23. An apparatus for localizing applications comprising:
means for receiving a request for an application to be represented in a locale (202);
means for loading an application template (208) having an area for content and an area for locale specific information corresponding to the locale;
means for caching one or more compressed localization objects with locale specific information corresponding to the application template (210); and
means for decompressing the one or more compressed localization objects as needed (210) to fill portions of the application template with locale specific information (212).
